# EUROPEAN PATENT APPLICATION

(11) **EP 4 498 471 A1**
(43) Date of publication of application: **29.01.2025**
(21) Application number: 23774766.2
(22) Date of filing: 16.03.2023
(51) Int. Cl.: H01M 10/0587, H01M 10/052

(54) **CYLINDRICAL NON-AQUEOUS ELECTROLYTE SECONDARY BATTERY**

(30) Priority: 22.03.2022 JP 2022045107
(71) Applicant: Panasonic Energy Co., Ltd., Osaka 570-8511 (JP)
(72) Inventor: KOBAYASHI, Kei, Kadoma-shi, Osaka 571-0057 (JP); MIZAWA, Atsushi, Kadoma-shi, Osaka 571-0057 (JP); MIZUKOSHI, Fumikazu, Kadoma-shi, Osaka 571-0057 (JP)
(74) Representative: Eisenführ Speiser
(86) International application number: PCT/JP2023/010412
(87) International publication number: WO 2023/182170

(57) **Abstract**

According to the present invention, a cylindrical non-aqueous electrolyte secondary battery includes: a wound electrode body (14) that is formed by winding a positive electrode plate and a negative electrode plate with a separator therebetween; an outer can that houses the electrode body (14); and a sealing body that seals an opening part of the outer can. The circularity, expressed as (shortest diameter)/(longest diameter), of the positive electrode plate once around the innermost circumference is less than the circularity of the positive electrode plate once around the outermost circumference.

## Description

### TECHNICAL FIELD

The present disclosure relates to a cylindrical non-aqueous electrolyte secondary battery.

### BACKGROUND ART

Non-aqueous electrolyte secondary batteries such as lithium ion batteries have been conventionally known which comprise an electrode assembly having a positive electrode plate and a negative electrode plate wound together with a separator interposed therebetween and an outer housing can that houses the electrode assembly and an electrolyte solution (e.g., Patent Literature 1). In addition, cylindrical secondary batteries have also been known in which a wound-type electrode assembly is disposed in an outer housing can having an almost cylindrical shape.

### CITATION LIST

### PATENT LITERATURE

PATENT LITERATURE 1: Japanese Unexamined Patent Application Publication No. 2006-107742

### SUMMARY

Cylindrical non-aqueous electrolyte secondary batteries are charged and discharged by means of charge carriers such as lithium ions going back and forth between electrode plates. At this time, an active material of the negative electrode plate, for example, occludes and releases charge carriers and therefore the active material expands and contracts.

Although the interior of the electrode assembly is filled with an electrolyte solution, the electrolyte solution is pushed out of the electrode assembly when the active material expands, and the electrolyte solution returns back into the electrode assembly when the active material contracts. Accordingly, in the case where the active material greatly expands and contracts or paths for the electrolyte solution in the electrode assembly are narrow, the electrolyte solution insufficiently returns back into the electrode assembly at the time of contraction and therefore the charge-discharge reaction is inhibited. The inhibition of the charge-discharge reaction may give rise to deterioration in charge-discharge cycle characteristics, specifically, decrease in capacity retention rate of the battery.

It is an advantage of the cylindrical non-aqueous electrolyte secondary battery according to the present disclosure to improve charge-discharge cycle characteristics.

A cylindrical non-aqueous electrolyte secondary battery according to the present disclosure comprises: a wound-type electrode assembly including a band-shaped positive electrode plate and a band-shaped negative electrode plate wound together with a separator interposed between the positive and negative electrode plates; an outer housing can that houses the electrode assembly and a non-aqueous electrolyte; and a sealing assembly that seals an opening of the outer housing can, wherein a circularity represented by (a smallest diameter)/(a greatest diameter) of a circumference of an innermost periphery of the positive electrode plate is smaller than a circularity of a circumference of an outermost periphery of the positive electrode plate.

According to the non-aqueous electrolyte secondary battery of the present disclosure, a portion having a large gap between the electrode plates is likely to be formed in part of the electrode assembly during charging and discharging, and thus the moving speed of the electrolyte solution throughout the electrode assembly can be increased. Therefore, the charge-discharge cycle characteristics of the secondary battery can be improved.

### BRIEF DESCRIPTION OF DRAWING

FIG. 1 is an axial sectional view of an exemplary non-aqueous electrolyte secondary battery according to an embodiment.
FIG. 2 is a schematic view of an electrode assembly of the non-aqueous electrolyte secondary battery of FIG. 1 as seen in the axial direction.
FIG. 3 is a view for explanation of the definition of the circularity according to the embodiment.
FIG. 4 is a view of a winding core as seen in the axial direction which is used at the time of winding of the electrode assembly according to the embodiment.
FIG. 5 is a schematic view showing that the moving speed of an electrolyte solution throughout the electrode assembly according to the embodiment increases at the time of contraction.
FIG. 6 is a schematic view showing that an electrolyte solution insufficiently returns back inward in an electrode assembly according to a comparative example at the time of contraction.

### DESCRIPTION OF EMBODIMENT

An embodiment according to the present invention will be described in detail below with reference to the accompanying drawings. In the following description, specific shapes, materials, numeral values, directions, and the like are merely examples for facilitating understanding of the present invention, and thus can be appropriately changed in conformity with the specification of the non-aqueous electrolyte secondary battery. In addition, a word "almost" as used hereinafter includes, for example, the case of completely the same and also the case of being regarded as substantially the same. Furthermore, in the case where a plurality of embodiments or modifications are included below, it is assumed from the beginning that characteristic portions thereof are employed in appropriate combinations.

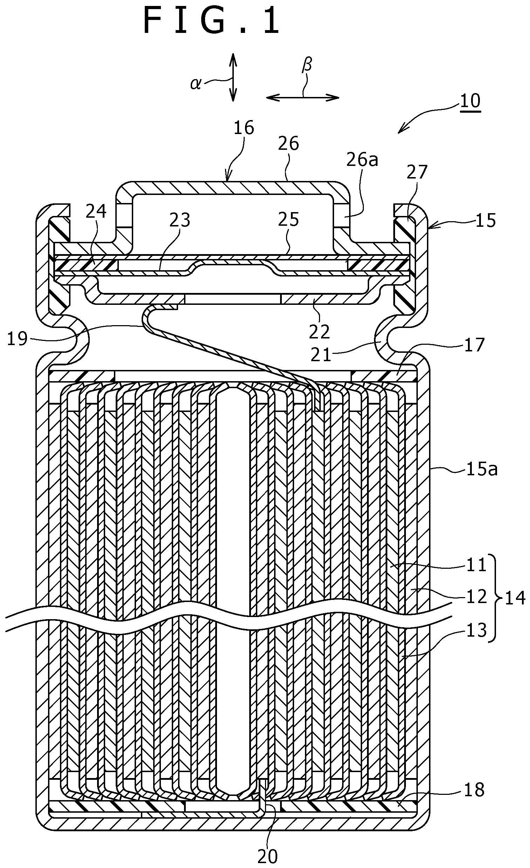

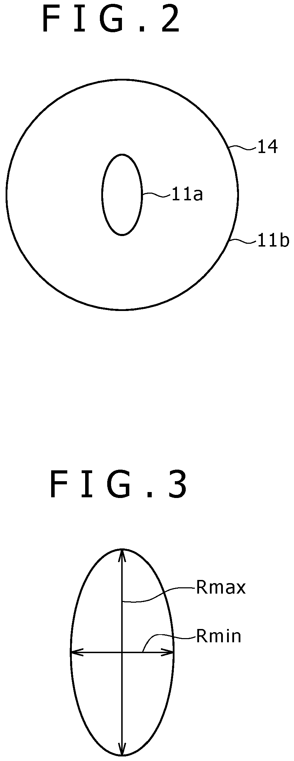

FIG. 1 is an axial sectional view of a cylindrical non-aqueous electrolyte secondary battery 10 according to an embodiment. FIG. 2 is a schematic view of an electrode assembly 14 of the cylindrical non-aqueous electrolyte secondary battery 10 as seen in an axial direction. As illustrated in FIG. 1, the non-aqueous electrolyte secondary battery 10 comprises the wound-type electrode assembly 14, a non-aqueous electrolyte (not illustrated), an outer housing can 15 having an almost cylindrical shape, and a sealing assembly 16. Hereinafter, the non-aqueous electrolyte secondary battery 10 may be simply referred to as a secondary battery 10.

The wound-type electrode assembly 14 includes a band-shaped positive electrode plate 11, a band-shaped negative electrode plate 12, and a band-shaped separator 13, and the positive electrode plate 11 and the negative electrode plate 12 are spirally wound together with the separator 13 interposed therebetween. Hereinafter, one side in the axial direction of the electrode assembly 14 may be referred to as "top", and the other side in the axial direction may be referred to as "bottom". The non-aqueous electrolyte contains a non-aqueous solvent and an electrolyte salt dissolved in the non-aqueous solvent. The non-aqueous electrolyte is not limited to a liquid electrolyte, and may be a solid electrolyte containing a gelled polymer or the like.

The positive electrode plate 11 has a band-shaped positive electrode core and a positive electrode tab 19 joined to the positive electrode core. The positive electrode tab 19 is a conductive member for electrically connecting the positive electrode core and a positive electrode terminal to each other, and extends from an upper end of the positive electrode core of the electrode assembly 14 toward one side (upper side) in the axial direction α. The positive electrode tab 19 is provided almost at the central portion in the radial direction β of the electrode assembly 14, for example. The positive electrode tab 19 is a band-shaped conductive member. The constituent materials for the positive electrode tab are not limited. The positive electrode tab 19 is preferably composed of metal containing aluminum as a principal component. Furthermore, the positive electrode core of the positive electrode plate 11 has an internally-wound surface (radially inner surface) and an externally-wound surface (radially outer surface) each provided with a positive electrode mixture layer.

The negative electrode plate 12 has a band-shaped negative electrode core and a negative electrode tab 20 joined to the negative electrode core. The negative electrode tab 20 is a conductive member for electrically connecting the negative electrode core and the outer housing can 15 (described later) to each other, and extends from a lower end of the negative electrode core of the electrode assembly 14 toward the other side (lower side) in the axial direction α. The outer housing can 15 serves as a negative electrode terminal. The negative electrode tab 20 is provided in an internally-wound portion (inner peripheral portion) of the electrode assembly 14, for example. The negative electrode tab 20 is a band-shaped conductive member. The constituent materials for the negative electrode tab are not limited. The negative electrode tab is preferably composed of metal containing nickel or copper as a principal component, or metal containing both nickel and copper. Furthermore, the negative electrode core of the negative electrode plate 12 has an internally-wound surface (radially inner surface) and an externally-wound surface (radially outer surface) each provided with a negative electrode mixture layer.

Furthermore, the negative electrode core is exposed on the outermost peripheral surface of the electrode assembly 14 and brought into contact with the inner surface of a cylindrical portion 15a of the outer housing can 15, and is thereby electrically connected to the outer housing can 15. Due to the electrical connection between the negative electrode plate 12 and the cylindrical portion 15a of the outer housing can 15, more favorable current collectability can be ensured.

The electrode assembly 14 has the wound structure including the positive electrode plate 11 and the negative electrode plate 12 spirally wound together with the separator 13 interposed therebetween, as described above. Since the positive electrode plate 11, the negative electrode plate 12, and the separator 13 are each shaped into a band and are spirally wound together, they are in the alternately layered state in the radial direction β of the electrode assembly 14. In the electrode assembly 14, the electrode-plate longitudinal direction of the electrode plates 11 and 12 corresponds to the winding direction, whereas the electrode-plate width direction of the electrode plates 11 and 12 corresponds to the axial direction α.

Furthermore, as illustrated by the schematic view of FIG. 2, the electrode assembly 14 has a circularity A, which is represented by (the smallest diameter)/(the greatest diameter), of an innermost peripheral portion 11a corresponding to the circumference of the innermost periphery of the positive electrode plate 11 smaller than a circularity B of an outermost peripheral portion 11b corresponding to the circumference of the outermost periphery of the positive electrode plate 11 (A<B). In FIG. 2, only the innermost peripheral portion 11a and the outermost peripheral portion 11b of the positive electrode plate 11 are schematically illustrated.

FIG. 3 is a view for explanation of the definition of the circularity. When the electrode assembly 14 is seen in the axial direction, the circularity is represented by Rmin/Rmax, where Rmax and Rmin represent the greatest diameter (long axis diameter) and the smallest diameter (short axis diameter), respectively, of the annular portion serving as the innermost peripheral portion 11a or the outermost peripheral portion 11b of the positive electrode plate 11. Regarding the circularity, Rmin/Rmax of the innermost peripheral portion 11a is smaller than Rmin/Rmax of the outermost peripheral portion 11b according to the embodiment, which means that the innermost peripheral portion 11a is closer to a flat shape than the outermost peripheral portion 11b. For this reason, the charge-discharge cycle characteristics of the secondary battery 10 can be improved. This will be described later in detail.

In the example illustrated in FIG. 1, the outer housing can 15 and the sealing assembly 16 constitute a metal battery case that houses the electrode assembly 14 and the non-aqueous electrolyte. Insulating plates 17 and 18 are provided above and below the electrode assembly 14, respectively. The positive electrode tab 19 extends through a through hole of the insulating plate 17 on the upper side toward the sealing assembly 16, and is connected to the lower surface of a filter 22 which serves as a bottom plate of the sealing assembly 16 by welding. In the non-aqueous electrolyte secondary battery 10, a cap 26 which serves as a top plate of the sealing assembly 16 electrically connected to the filter 22 serves as the positive electrode terminal.

The outer housing can 15 is a container made of metal having a bottomed tubular shape, e.g., a bottomed cylindrical shape, provided with an opening. A gasket 27 is provided between the outer housing can 15 and the sealing assembly 16, thereby the interior of the outer housing can 15 is kept airtight. The outer housing can 15 has a grooved portion 21 formed by, for example, processing the side wall by spinning from the outer side toward the inner side in the radial direction. The grooved portion 21 is preferably formed annularly along the circumferential direction of the outer housing can 15, and the upper surface of the grooved portion 21 supports the sealing assembly 16. The sealing assembly 16 seals the opening of the outer housing can 15.

The sealing assembly 16 includes the filter 22, a lower valve member 23, an insulating member 24, an upper valve member 25, and the cap 26 layered in order from the side of the electrode assembly 14. The constituents of the sealing assembly 16 each has a disk shape or a ring shape, for example, and the constituents other than the insulating member 24 are electrically connected to each other. The central portions of the lower valve member 23 and the upper valve member 25 are connected, and the insulating member 24 is interposed between the peripheral portions thereof. In case of inner pressure rise in the battery due to an abnormal heat generation, the lower valve member 23 is broken, for example, which causes the upper valve member 25 to swell toward the cap 26 and separate from the lower valve member 23, thereby the electrical connection therebetween is cut off. In case of further inner pressure rise, the upper valve member 25 is broken and gas is discharged through an opening 26a of the cap 26.

The elements of the electrode assembly 14 will be described in detail below. The positive electrode plate 11 includes the band-shaped positive electrode core and the positive electrode mixture layer formed on both sides of the positive electrode core. Examples of materials for the positive electrode core include a metal foil made of aluminum or the like, and a film provided with such a metal on the surface layer. The positive electrode core is preferably a metal foil containing aluminum or an aluminum alloy as a principal component. The thickness of the positive electrode core is, for example, 10 µm to 30 µm.

The positive electrode mixture layer preferably contains a positive electrode active material, a conductive agent, and a binding agent. The positive electrode plate 11 is produced by applying positive electrode mixture slurry containing a positive electrode active material, a conductive agent, a binding agent, and a solvent such as N-methyl-2-pyrrolidone (NMP) on the both sides of the positive electrode core, followed by drying and rolling.

Examples of the positive electrode active material include lithium-containing transition metal oxides that contain a transition metal atom such as Co, Mn, and Ni. The lithium-containing transition metal oxides are not limited, but are preferably composite oxides represented by a general formula Li_{1+X}MO₂ (where -0.2 < x ≤ 0.2, and M contains at least one of the group consisting of Ni, Co, Mn, and Al).

Examples of the conductive agent include carbon materials including carbon blacks (CB) such as acetylene black (AB) and ketjen black, graphite, and the like. Examples of the binding agent include fluorine resins such as polytetrafluoroethylene (PTFE) and polyvinylidene difluoride (PVdF), polyacrylonitrile (PAN), polyimide (PI), acrylic resins, polyolefin resins, and the like. The above resins and carboxy methyl cellulose (CMC) or a salt thereof, polyethylene oxide (PEO), or the like may be used together. These materials may be used alone or in combination of two or more thereof.

The positive electrode plate 11 is provided with an exposed surface, where a surface of metal constituting the positive electrode core is exposed, in part of the positive electrode plate 11, e.g., almost in the central portion thereof in the electrode-plate longitudinal direction. The positive electrode tab 19 is joined to the exposed surface by ultrasonic welding, for example, and extends from one end in the electrode-plate short direction (upper end) of the positive electrode core.

The negative electrode plate 12 includes the band-shaped negative electrode core and the negative electrode mixture layer formed on both sides of the negative electrode core. Examples of materials for the negative electrode core include a metal foil made of copper or the like, and a film provided with such a metal on the surface layer. The thickness of the negative electrode core is, for example, 5 µm to 30 µm.

The negative electrode mixture layer preferably contains a negative electrode active material and a binding agent. The negative electrode plate 12 is produced by applying negative electrode mixture slurry containing, for example, a negative electrode active material, a binding agent, water, and the like on the both sides of the negative electrode core, followed by drying and rolling.

Examples of the negative electrode active material are not limited as long as it can reversibly occlude and release lithium ions, and include carbon materials such as natural graphite and artificial graphite, Si, metals which can be made into an alloy with lithium such as Sn, or alloys containing them, composite oxides, and the like. Examples of the binding agent contained in the negative electrode mixture layer include the resins exemplified for the positive electrode plate 11. In the case where the negative electrode mixture slurry is prepared with use of an aqueous solvent, styrene-butadiene rubber (SBR), CMC or a salt thereof, polyacrylic acid or a salt thereof, polyvinyl alcohol, or the like can be used. These materials may be used alone or in combination of two or more thereof.

The negative electrode plate 12 is provided with an exposed surface, where a surface of metal constituting the negative electrode core is exposed, in part of the negative electrode plate 12 in the electrode-plate longitudinal direction, e.g., in the winding-start end portion. The negative electrode tab 20 is joined to the exposed surface by ultrasonic welding, for example, and extends from one end in the electrode-plate short direction (lower end) of the negative electrode core.

The separator 13 is formed of a porous sheet having ion-permeability and an insulating property. Examples of the porous sheet include microporous thin films, woven fabrics, nonwoven fabrics, and the like. The separator 13 is preferably made of an olefin resin such as polyethylene and polypropylene. The thickness of the separator 13 is, for example, 10 µm to 50 µm. The thickness of the separator 13 tends to be made small in view of improvement in capacity and power of the battery. The separator 13 has a melting point of about, for example, 130°C to 180°C.

In addition, tape (not illustrated) is attached to the outermost peripheral surface of the negative electrode plate 12, which serves as the outermost peripheral surface of the electrode assembly 14, so as to fix the winding-finish end of the negative electrode plate 12 to the outermost peripheral surface of the negative electrode plate 12.

Furthermore, the electrode assembly 14 has the circularity A, which is represented by (the smallest diameter)/(the greatest diameter), of the innermost peripheral portion 11a corresponding to the circumference of the innermost periphery of the positive electrode plate 11 smaller than the circularity B of the outermost peripheral portion 11b corresponding to the circumference of the outermost periphery of the positive electrode plate 11 (A<B), as described above.

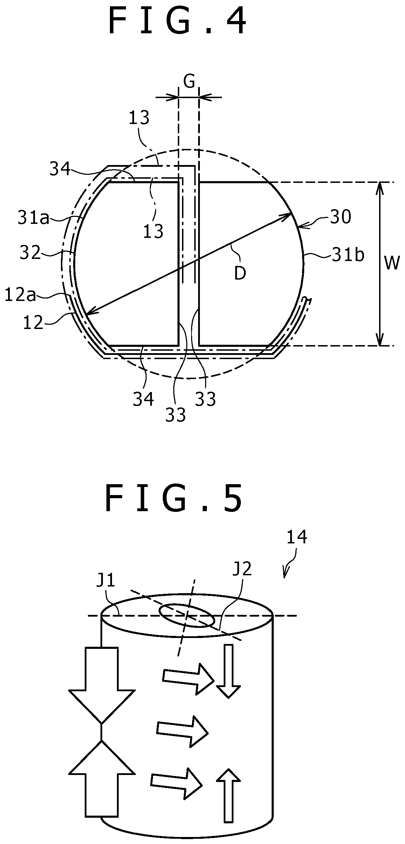

In order that the innermost peripheral portion 11a and the outermost peripheral portion 11b of the positive electrode plate 11 have different circularities as described above, a winding core 30 illustrated in FIG. 4 is used, for example, to wind the positive electrode plate 11, the negative electrode plate 12, and the separator 13. Specifically, the winding core 30 includes two winding core elements 31a and 31b facing each other. Each of the two winding core elements 31a and 31b is shaped into a column having an almost semicircular section and, as viewed in the axial direction, has such a shape that both ends are cut off by parallel planes, including a cylindrical surface portion 32, an inner planar portion 33 opposite to the cylindrical surface portion 32, and outer planar portions 34 provided on the both ends and vertical to the inner planar portion 33. The two winding core elements 31a and 31b are formed such that the respective cylindrical surface portions 32 are positioned on the same cylindrical surface having a diameter of D with the respective inner planar portions 33 parallelly facing each other with a gap of a predetermined width G therebetween, as viewed in the axial direction.

In FIG. 4, two separators 13 are schematically illustrated by two dashed and single-dotted lines, and the negative electrode plate 12 is schematically illustrated by a solid line sandwiched by the two separators 13. As illustrated in FIG. 4, during winding of the electrode assembly 14, portions of the two separators 13 further extending on the winding-starting side than a winding-start end 12a of the negative electrode plate 12 are sandwiched by the two winding core elements 31a and 31b with the negative electrode plate 12 sandwiched by the two separators 13. Subsequently, the spiral winding is performed on the outer side of the two winding core elements 31a and 31b, and on the way of the winding, the positive electrode plate 11 (FIG. 1) is drawn to the internally-wound side and the winding is further performed, thereby the wound-state electrode assembly 14 is formed.

Each of the separators 13, the negative electrode plate 12, and the positive electrode plate 11 is drawn from a corresponding wound roll (not illustrated). In the state where winding of the electrode assembly 14 is finished, the two winding core elements 31a and 31b are extracted from the inside of the electrode assembly 14 in the axial direction. As a result, a hollow portion is formed in the center of the electrode assembly 14. Since the winding core elements 31a and 31b have the outer planar portions 34 on the both sides as described above, the circularity of the innermost peripheral portion of the positive electrode plate 11 is smaller than 1 and thus the shape of the innermost peripheral portion is made close to a flat shape.

Furthermore, the circularity of the innermost peripheral portion of the positive electrode plate 11 can be adjusted by way of the circularity of the winding core 30 used when the electrode assembly 14 is wound. In addition, the tension between each wound roll and the winding portion of the electrode assembly 14 may be controlled at the time of winding so as to make the circularity of the innermost peripheral portion of the positive electrode plate 11 smaller than the circularity of the outermost peripheral portion of the positive electrode plate 11. For example, the tension is set to be high at the time of winding of the innermost peripheral portion of the electrode assembly 14 so that the sectional shape of the innermost peripheral portion can be made close to a flat shape along the shape of the outer periphery of the winding core 30. On the other hand, the tension is set to be low for the externally-wound side of the electrode assembly 14 so that the sectional shape of the corresponding winding portion is made close to a true circle, that is, the circularity is made close to 1. With this configuration, the circularity of the innermost peripheral portion of the positive electrode plate 11 can be made smaller than the circularity of the outermost peripheral portion of the positive electrode plate 11 in the electrode assembly 14.

The circularities of the innermost peripheral portion and the outermost peripheral portion of the positive electrode plate 11 are measured by extracting coordinates of respective portions from an X -ray CT image of the secondary battery 10. Therefore, by confirmation of the measurement values, it can be confirmed that the circularity of innermost peripheral portion of the positive electrode plate 11 is smaller than the circularity of the outermost peripheral portion of the positive electrode plate 11 in the embodiment.

The ratio represented by (circularity A of innermost peripheral portion 11a of positive electrode plate 1 1)/(circularity B of outermost peripheral portion 11b of positive electrode plate 11) is preferably less than or equal to 0.94. In addition, the ratio A/B is preferably greater than or equal to 0.5.

According to the above-described secondary battery 10, a portion having a large gap between the electrode plates is likely to be formed in part of the electrode assembly 14 during charging and discharging, and thus the moving speed of the electrolyte solution throughout the electrode assembly 14 can be increased. Specifically, since the circularity A of the innermost peripheral portion 11a of the positive electrode plate 11 is smaller than the circularity B of the outermost peripheral portion 11b of the positive electrode plate 11, the difference between the greatest diameter and the smallest diameter of the innermost peripheral portion of the electrode assembly 14 is likely to be large. Accordingly, when the electrode assembly 14 expands or contracts due to the expansion or contraction of an active material, e.g., the negative electrode active material, a portion having a large gap between the electrode plates is likely to be formed in a position at the same phase as that of the smallest diameter of the innermost peripheral portion of the electrode assembly 14. For this reason, as illustrated in FIG. 5 in which the electrode assembly 14 according to the embodiment is schematically illustrated, the electrolyte solution moves to and from the interior and exterior of the electrode assembly 14 at high speed in the axial direction through the large gap between the electrode plates (the portion represented by phase J1 in FIG. 5). In FIG. 5, the greater the thickness of the white arrow, the higher the moving speed of the electrolyte solution. At this time, the circumferential distance on the outer peripheral surface is generally smaller than the axial distance of the electrode assembly 14, and therefore the electrolyte solution circumferentially moves in short time between an area in the position at the same phase as that of the smallest diameter of the innermost peripheral portion of the electrode assembly 14 (phase J1 in FIG. 5) and an area in the position at the same phase as that of the greatest diameter of the innermost peripheral portion of the electrode assembly 14 (phase J2 in FIG. 5). As a result, the moving speed of the electrolyte solution throughout the electrode assembly 14 can be increased. This can prevent inhibition of the charge-discharge reaction due to insufficient movement of the electrolyte solution related to expansion and contraction of the active materials, and therefore the charge-discharge cycle characteristics of the secondary battery 10 can be improved.

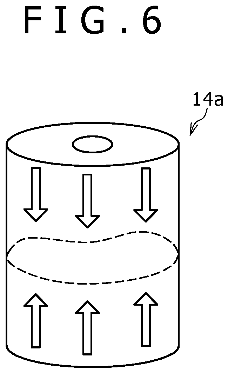

On the other hand, FIG. 6 is a schematic view of an electrode assembly 14a according to a comparative example. In the electrode assembly 14a of the comparative example, a circularity A of the innermost peripheral portion of the positive electrode plate is high, which is equal to a circularity B of the outermost peripheral portion of the positive electrode plate. Accordingly, the circularity of the innermost peripheral portion of the electrode assembly 14a is almost equal to the circularity of the outermost peripheral portion of the electrode assembly 14a. In this case, a portion having a large gap between the electrode plates is not likely to be formed in part of the electrode assembly 14a, and thus the speed of the electrolyte solution is low which moves to and from the interior and exterior of the electrode assembly 14 in the axial direction. For this reason, the electrolyte solution may insufficiently return back into the electrode assembly 14a at the time of contraction of the electrode assembly 14 and accordingly the charge-discharge reaction may be inhibited, and therefore, there is still room for improvement in terms of the charge-discharge cycle characteristics. According to the embodiment illustrated in FIG. 1 to FIG. 5, such a disadvantage can be prevented since a portion having a large gap between the electrode plates is likely to be formed in part of the electrode assembly 14 as described above, and therefore the charge-discharge cycle characteristics can be improved.

In addition, the configuration in which the ratio represented by (circularity A of innermost peripheral portion 11a of positive electrode plate 1 1)/(circularity B of outermost peripheral portion 11b of positive electrode plate 11) is less than or equal to 0.94 according to the embodiment, a portion having a large gap between the electrode plates is further likely to be formed between the innermost peripheral portion and the outermost peripheral portion of the electrode assembly 14. With this configuration, the effect of improving the charge-discharge cycle characteristics is significant.

### EXAMPLES

The inventors of the present disclosure produced four secondary batteries in total including secondary batteries of Examples 1 to 3 and a secondary battery of a comparative example on the conditions described below including the settings of the circularities of the innermost peripheral portion and the outermost peripheral portion of the positive electrode plate 11 as shown in Table 1 below, and then evaluated the respective secondary batteries in terms of the capacity retention rate, which represents the charge-discharge cycle characteristics.

**[Table 1]**

| | Positive Electrode Innermost Peripheral Circularity A (%) | Positive Electrode Outermost Peripheral Circularity B (%) | A/B | Capacity Retention Rate (%) |
|---|---|---|---|---|
| Example 1 | 82 | 96 | 0.85 | 95.2 |
| Example 2 | 85 | 96 | 0.89 | 94.9 |
| Example 3 | 91 | 96 | 0.94 | 94.6 |
| Comparative Example 1 | 97 | 97 | 1.00 | 93.4 |

### [Example 1]

### [Production of Positive Electrode Plate 11]

Lithium nickel cobalt aluminum composite oxide represented by LiNi_{0.88}Co_{0.09}Al_{0.03}O₂ was used as the positive electrode active material, and 100 pts.mass of LiNi_{0.88}Co_{0.09}Al_{0.03}O₂, 1 pt.mass of acetylene black (AB), and 1 pt.mass of polyvinylidene difluoride (PVDF) (binding agent) were mixed, and an appropriate amount of N-methyl-2-pyrrolidone (NMP) was further added thereto, thereby preparing positive electrode mixture slurry. Next, both sides of a long positive electrode core made of aluminum foil were coated with the positive electrode mixture slurry, and dried with a drying machine. Subsequently, the dried positive electrode core coated with the positive electrode mixture slurry was cut into a predetermined electrode size and compressed by rollers, thereby the positive electrode plate 11 was produced in which each side of the positive electrode core was provided with a positive electrode mixture layer. Note that the crystal structure of LiNi_{0.88}Co_{0.09}Al_{0.03}O₂ was a layered rock-salt structure (hexagonal crystal, space group R3-m). When the positive electrode core was coated with the positive electrode mixture slurry, a plain portion, namely a core exposed surface not provided with the active material was formed at the central portion of the positive electrode core, and a positive electrode tab made of aluminum was fixed thereto by ultrasonic welding.

### [Production of Negative Electrode Plate 12]

A mixture of 95 pts.mass of graphite powder and 5 pts.mass of silicon oxide was used as the negative electrode active material, and 100 pts.mass of the negative electrode active material, 1 pt.mass of styrene-butadiene rubber (SBR) as a binder, and 1 pt.mass of carboxy methyl cellulose (CMC) as a thickener were mixed. The mixture was dispersed in water, thereby preparing negative electrode mixture slurry. The negative electrode mixture slurry was applied onto both sides of the negative electrode core, and the resulting material was dried with a drying machine and compressed by rollers of a roll press machine into a predetermined thickness. The material, which was obtained by applying the negative electrode mixture slurry onto the negative electrode core followed by drying, was cut into a predetermined electrode size, thereby producing the negative electrode plate 12 in which a negative electrode mixture layer was formed on both sides of the negative electrode core. In addition, when the negative electrode core was coated with the negative electrode mixture slurry, a plain portion, namely a core exposed surface not provided with the active material on both sides was formed on one end portion of the negative electrode core, and a negative electrode tab made of nickel was fixed to the plain portion on either side by ultrasonic welding. Furthermore, when the negative electrode core was coated with the negative electrode mixture slurry, a plain portion, namely a core exposed surface not provided with the active material on both sides was formed on the other end portion of the negative electrode core, and a one-side coated portion in which the active material was provided on one side was formed in a position adjacent to the plain portion on the central portion side in the longitudinal direction of the negative electrode plate.

### [Production of Electrode Assembly 14]

An insulating tape was employed to cover the welded portion of the positive electrode plate 11 between the positive electrode tab and the positive electrode core and the welded portion of the negative electrode plate 12 between the negative electrode tab and the negative electrode core. Subsequently, the winding core 30 illustrated in FIG. 4 was used to spirally wound the positive electrode plate 11 and the negative electrode plate 12 with the separator 13 interposed between the electrode plates. In addition, a tape made of a polypropylene film coated with an acrylic adhesive was attached around the outermost periphery of the wound material, thereby producing the wound-type electrode assembly 14. At this time, the winding core elements 31a and 31b had a distance W (FIG. 4) of 3.3 mm between their outer planar surfaces. In addition, the winding core 30 had a diameter D of 4 mm of the cylindrical surface portions 32, and the winding core elements 31a and 31b had a gap having a width G of 0.4 mm. The electrode plates 11 and 12 and the separator 13 were wound with the two the winding core elements 31a and 31b such that the end portion of the negative electrode plate 12 provided with the negative electrode tab 20 was positioned at the inner periphery of the electrode assembly 14 whereas the end portion of the negative electrode plate 12 provided with the one-side coated portion was positioned at the outer periphery of the electrode assembly 14, and the coated surface of the one-side coated portion was on the inside. The separator 13 was made of microporous polyethylene film having one side provided with a heat-resistant layer containing polyamide and alumina as a filler dispersed therein.

Since the two winding core elements 31a and 31b had the above-described distance W between their planar surfaces, the circularity A of the innermost peripheral portion 11a of the positive electrode plate 11 was 82% and the circularity B of the outermost peripheral portion 11b of the positive electrode plate 11 was 96%, and A/B was 0.85, as shown in Table 1 above.

### [Preparation of Non-Aqueous Electrolyte]

To a mixed solvent containing ethylene carbonate (EC), dimethyl carbonate (DMC), and diethyl carbonate (DEC) in a ratio of EC:DMC:DEC = 3:3:4 by volume was dissolved LiPF₆ in an amount of 1 mol/L, thereby preparing a non-aqueous electrolyte.

### [Production of Secondary Battery]

The above-described electrode assembly 14 was housed in the outer housing can 15 having a bottomed cylindrical shape which had an outer diameter of 21 mm and a height (axial length) of 70 mm, the insulating plates 17 and 18 were disposed above and below the electrode assembly 14, respectively, and the above-described non-aqueous electrolyte was filled into the outer housing can 15 by a vacuum method. Subsequently, the sealing assembly 16 was fixed onto the end portion of the opening of the outer housing can 15 by crimping with the gasket 27 interposed therebetween, thereby producing the cylindrical secondary battery 10 of type 21700.

### [Example 2]

In Example 2, the electrode assembly 14 was wound with use of elements 31a and 3 1b having a distance W (illustrated in FIG. 4) of 3.5 mm between their planar surfaces. In addition, the circularity A of the innermost peripheral portion of the positive electrode plate 11 of Example 2 was 85% and the circularity B of the outermost peripheral portion of the positive electrode plate 11 was 96%, and A/B was 0.89, as shown in Table 1 above. In Example 2, the other configurations were the same as those of Example 1.

### [Example 3]

In Example 3, the electrode assembly 14 was wound with use of elements 31a and 31b having a distance W (illustrated in FIG. 4) of 3.7 mm between their planar surfaces. In addition, the circularity A of the innermost peripheral portion of the positive electrode plate 11 of Example 3 was 91% and the circularity B of the outermost peripheral portion of the positive electrode plate 11 was 96%, and A/B was 0.94, as shown in Table 1 above. In Example 3, the other configurations were the same as those of Example 1.

### [Comparative Example]

In the comparative example, the electrode assembly 14 was wound with use of elements 31a and 31b having a distance W (illustrated in FIG. 4) of 3.98 mm between their planar surfaces. In addition, the circularity A of the innermost peripheral portion of the positive electrode plate 11 of the comparative example was 97% and the circularity B of the outermost peripheral portion of the positive electrode plate 11 was 97%, and A/B was 1.00, as shown in Table 1 above. In the comparative example, the other configurations were the same as those of Example 1.

### [Test Method]

Each of the secondary batteries 10 of Example 1 to 3 and the comparative example obtained as described above was charged with a constant current of 2500 mA until the voltage of the battery reached 4.2 V, and thereafter, charged with a constant voltage of 4.2 V until the current value of the battery reached 250 mA, thereby initial charging was performed. Furthermore, the battery was subsequently discharged with a constant current of 2500 mA until the voltage of the battery reached 2.5 V, thereby initial discharging was performed. The discharge capacity at this time was defined as an initial discharge capacity. Furthermore, after the charge-discharge cycle was repeated up to 100 cycles on the above conditions, the discharge capacity at the 100th cycle was divided by the initial discharge capacity, and the calculation result was defined as a capacity retention rate.

### [Test Result]

Table 1 shows the test results in the column of the capacity retention rate. As shown in Table 1, it was confirmed that Examples 1 to 3 in which A/B was less than 1, that is, (circularity A of innermost peripheral portion 11a of positive electrode plate 1 1)/(circularity B of outermost peripheral portion 11b of positive electrode plate 11) was smaller than that of the comparative example, exhibited greater capacity retention rates after 100 cycles than the comparative example. This shows that the charge-discharge cycle characteristics of the battery can be increased by making the circularity A of the innermost peripheral portion 11a of the positive electrode plate 11 smaller than the circularity of the outermost peripheral portion 1 1b of the positive electrode plate 11.

### REFERENCE SIGNS LIST

10 Cylindrical non-aqueous electrolyte secondary battery (Secondary battery), 11 Positive electrode plate, 11a Innermost peripheral portion, 11b Outermost peripheral portion, 12 Negative electrode plate, 12a Winding-start end, 13 Separator, 14, 14a Electrode assembly, 15 Outer housing can, 15a Cylindrical portion, 16 Sealing assembly, 17, 18 Insulating plate, 19 Positive electrode tab, 20 Positive electrode tab, 20 Negative electrode tab, 21 Grooved portion, 22 filter, 23 Lower valve member, 24 Insulating member, 26 cap, 26a Opening, 27 Gasket, 30 Winding core, 31a, 31b Winding core element.

## Claims

1. A cylindrical non-aqueous electrolyte secondary battery, comprising:
a wound-type electrode assembly including a band-shaped positive electrode plate and a band-shaped negative electrode plate wound together with a separator interposed between the positive and negative electrode plates;
an outer housing can that houses the electrode assembly and a non-aqueous electrolyte; and
a sealing assembly that seals an opening of the outer housing can, wherein
a circularity represented by (a smallest diameter)/(a greatest diameter) of a circumference of an innermost periphery of the positive electrode plate is smaller than a circularity of a circumference of an outermost periphery of the positive electrode plate.

2. The cylindrical non-aqueous electrolyte secondary battery according to claim 1, wherein
a ratio represented by (the circularity of the circumference of the innermost periphery of the positive electrode plate)/(the circularity of the circumference of the outermost periphery of the positive electrode plate) is less than or equal to 0.94.
